# EUROPEAN PATENT APPLICATION

(11) **EP 4 481 662 A1**
(43) Date of publication of application: **25.12.2024**
(21) Application number: 23181219.9
(22) Date of filing: 23.06.2023
(51) Int. Cl.: G06Q 30/018, G06Q 50/18, G06N 3/02, G06T 1/00

(54) **DETECTING INFRINGEMENTS OF A DESIGN**

(71) Applicant: Koninklijke Philips N.V., 5656 AG Eindhoven (NL)
(72) Inventor: LOWET, Dietwig Jos Clement, Eindhoven (NL); BEREZHNOY, Igor, Eindhoven (NL); GIZATULLIN, Ramil, 5656AG Eindhoven (NL); VAN DER STAM, Louis, Eindhoven (NL); VIJAYKUMAR, Adithya, Eindhoven (NL)
(74) Representative: Philips Intellectual Property & Standards

(57) **Abstract**

A computer-implemented method for detecting infringements of a design, comprising the following steps: receiving product information of products comprising a sales address and a sales image (10); applying a product extracting algorithm on the sales image (10) to get at least one extracted product image (11) comprising the depiction of the product; applying a trained infringement predicting algorithm on each of the extracted product images (11) to generate a subset of products predicted to be infringing, wherein the output of the infringement predicting algorithm comprises an infringement classification comprising an infringement confidence value and an infringement prediction of whether the product infringes the at least one design, presenting images (10, 11) only from the subset of products to a user via a user interface and allowing the user to confirm the infringement prediction via the user interface; providing a set of product infringement information data.

## Description

### FIELD OF THE INVENTION

The invention relates to a computer-implemented method for detecting an infringement, a corresponding computer program, an infringement detecting system, and a method for training a neural network.

### BACKGROUND OF THE INVENTION

Infringement of intellectual property (IP) rights is a serious problem for many companies and manufacturers that can be expensive, both, in terms of lost profits and concerning attempts of detection. One aspect of infringement can be the infringement of a protected design. A design can be protected via various intellectual property rights, such as via a patent, via a device trademark or three-dimensional (3D) trademark, via a registered or non-registered design right or design patent, via competition law or via copyright/author's rights and related rights. Competitors of IP right holders copy protected designs without permission and offer corresponding products that infringe the protected designs, often with lower quality and/or for a lower price, thereby illegitimately profiting from the reputation and marketing of the IP right holder. With the increasing popularity and size of online shops, the number of products with infringing designs that are offered in online shops has increased drastically in recent years. On the one hand, this increases the negative impact of the infringements on the sales of the IP right holder, on the other hand, this makes trying to detect all cases of infringement a lot more cumbersome and time-consuming.

A possible method to search for infringing designs is to personally search internet shops, e.g. by using the shop's search function and search for corresponding products. The search may, preferably, be performed by an expert for IP rights, e.g. a design rights expert. A design right expert is somebody specialized in design right law that typically has a legal background. Due to the huge workload of personally scanning all relevant internet shops, the IP rights expert may offload some of the work to one or several other persons, such as a takedown agent or a takedown agency. A takedown agent may in particular be someone with basic IP right knowledge, who is able to determine whether two products are the same or not from an IP perspective and who can initiate the actions required for removing an infringing product from a shop. For example, an IP rights expert may notify takedown agents of infringing products and the takedown agents may look for those specific products on internet shops. After finding an infringing product sold online, the takedown agents may then, for example, send a takedown message for that product to the shop owner.

However, such a personal search, both by an IP rights specialized and by a takedown agent, can be a time-consuming task, which may be further hindered by often non-transparent search functions of internet shops. Hence, depending on a previous search history and other (unknown) factors the result of a search with the same search term may vary, thus making a regular observation of internet shops difficult and unreliable. Consequently, in many cases, it may be nearly impossible to perform an exhaustive, regular observation of internet shops for design infringement due to the number of products and a constantly changing order of search results.

Consequently, it would be desirable to find a way to decrease the personal workload that is connected with infringement detection. One approach could be to automatize at least parts of the corresponding workload. However, design protections may be difficult to formulate due to the complex and different laws and case law decisions in different jurisdictions. Furthermore, design infringements are becoming increasingly more sophisticated, e.g. by operating at the fringe between infringement and non-infringement. This makes it even more difficult to assess whether an offered product is infringing a protected design. For example, some infringers may introduce small elements in the infringing designs, such as small variations in shape that are still within the scope of a protective right, or copy only distinctive shape elements, in order to try and fool automatic detection tools.

Machine learning has generally been applied to the problem of recognizing specific protected features in images. For example, EP 3 754 551 A1 discloses A system for training a machine learning model. The system comprises processing means configured to receive data defining one or more characteristics associated with a first item. The system receives a plurality of images of the first item wherein the plurality of images are associated with a plurality of different image sources. The system trains the machine learning model using the plurality of images and the one or more characteristics. However, it has been found that prior art methods are cumbersome to train and often do not give the desired results, thus in reality do not reduce the workload on the part of the IP expert.

### OBJECT OF THE INVENTION

It is, therefore, an object of the invention to provide a method to better address at least some of the above-mentioned problems that are connected to a detection of design infringement. In particular, it would be desirable to find a solution that reduces the personal workload and improves on the possibilities of finding a large number, preferably nearly all instances, of design infringements.

### SUMMARY OF THE INVENTION

To better address this object, a method according to claim 1, a computer program according to claim 13, an infringement detecting system according to claim 14, and a method according to claim 14 are provided. Advantageous embodiments are set out in the dependent claims. Any features, advantages or alternative embodiments described herein in relation to the claimed method are also applicable to the other claim categories and vice versa.

According to a first aspect of the invention, a computer-implemented method for detecting infringements of at least one design protected by an intellectual property right is provided. The computer-implemented method comprises the following steps:
(a) receiving product information of each of a plurality of products, the product information comprising a sales address, in particular a product page internet address, and a sales image comprising a depiction of the product;
(b) for each of the plurality of products, applying a product extracting algorithm on the sales image, wherein the output of the product extracting algorithm is at least one extracted product image that is a part of the sales image, the at least one extracted product image comprising the depiction of the product;
(c) applying a trained infringement predicting algorithm on each of the extracted product images to generate a subset of products predicted to be infringing, wherein the output of the infringement predicting algorithm comprises an infringement classification, wherein the infringement classification comprises an infringement confidence value and an infringement prediction of whether the product infringes the at least one design, wherein the product is predicted to be infringing if the infringement confidence value exceeds a predetermined infringement threshold;
(d) presenting sales images and/or extracted product images only from the subset of products that are predicted to be infringing to a user via a user interface and allowing the user to confirm the infringement prediction via the user interface, thereby labelling each product with a ground truth infringement label comprising information on whether the product has been classified as infringing or not-infringing by a user;
(e) providing a set of product infringement information data comprising at least the ground truth infringement label and the sales address for each product confirmed to be infringing by the user.

An infringement of a design protected by an IP right is to be understood in a broad sense. In particular it is not to be understood such that the term "IP rights" comprises only design rights (registered and unregistered), but also other intellectual property rights (both registered and unregistered) that may protect a particular design, such as a patent, a design patent, a device mark, a (3D) trademark, a trade dress, a design protected by competition law or by a copyright/author's rights and related rights. A product can be protected by one several designs protected by IP rights, e.g. a plurality of design registrations. The term "design" is to be understood in a broad sense, and comprises any feature of the product or part of the product, which is visible on the sales image, in particular its shape, color, texture, arrangement of buttons, etc. The at least one design may comprise a plurality of designs. For example, a part of the product may be protected by one design right, and the overall shape may be protected by another design right.

Preferably, the method is carried out by a processing unit. A processing unit may, for example, be part of a personal computer, a tablet, a smart phone or a server.

Advantageously, the inventive method may allow to decrease the workload of a user when trying to determine infringements of designs. The user may preferably be an IP rights expert, such as a design rights expert. For this purpose, in particular two algorithms, a product extracting algorithm and an infringement predicting algorithm, are provided together with a user interface. It is the combination of these algorithms and the user interface and their provided functionality that may allow to decrease the personal workload of the user and still allow to achieve a good reliability of infringement detection. Via the selection of the infringement detection algorithm, the number of images that have to be manually/personally checked by the user is decreased by providing only a subset of products via the user interface. On the other hand, the expertise of the user is used to verify the output of the algorithm by letting the user confirm the positive output of the infringement predicting algorithm. Accordingly, it may be possible to detect a greater number of infringing products.

The product information may, for example, be received from a database of product information or from any other source of data. The database of product information may preferably be updated regularly automatically or manually. Additionally or alternatively, the product information may be received (directly or indirectly) from a crawler algorithm as described herein. The plurality of products may be a subgroup of or all products of the database. The plurality of products may be a subgroup of or all products of one or several internet shops. It is also conceivable that the products may be offered offline, e.g. in local stores. While this method may preferably be applied to products from internet shops, it is thus also conceivable to apply the method on products from other sources. The sales address is preferably a piece of information that may allow to identify where or by whom the product is sold and/or how to address someone responsible for the sale or someone who is capable to stop the sale. Preferably, the sales address is a product page internet address, in particular of an internet shop. For example, the internet address may be an URL leading to or allowing to get to the product offer of the product on the internet shop. The sales image may preferably be an image that is provided on the sales page of the internet shop. Hence the inventive method may allow to directly assess the product as offered on the internet shop. Alternatively, the sales image may originate from other sources. For example, sales images may originate from a (e.g. digital or printed) sales catalogue or from taken photographs of the product. The product information may optionally comprise a plurality of sales images. For example, some internet shops show several sales images, e.g. as part of an image gallery, on all or some of their product pages. Accordingly, all the sales images or a subgroup of the sales images may be part of the product information of a product. For example, a filter algorithm may filter the available sales images such that only sales images that depict the product and/or a part of the product are added to the product information when the product information is created.

Sales images may often comprise additional information and graphics or photos next to the depiction of the product. For example, the sales images may comprise advertising texts or other texts, one or several persons using the product, tables, etc. Furthermore, the sales image may comprise multiple depictions of the product, e.g. from different view angles and/or in different zoom-in stages. It has been found that applying an infringement predicting algorithm as described in step (c) can lead to suboptimal, maybe even useless, results in some cases, e.g. when there is too much additional information on the sales image next to the depiction of the product. Advantageously, applying the product extracting algorithm on the sales images and applying the infringement predicting algorithm on the extracted product image can increase the quality and reliability of the infringement predicting algorithm. Hence, both algorithms may work particularly well together, allowing significantly better results than what would otherwise be possible. Hence, in the context of this method, the two algorithms may work together particularly well. The product extracting algorithm may have further advantages. For example, in step (d) the user may have an easier time of getting an overview due to being presented (also) the extracted product image(s). Furthermore, it may be easier to assess the basis on which the infringement detecting algorithm has determined whether there is an infringement. This may particularly be the case, when the sales image comprises multiple depictions of the product. Hence, the user may be notified on basis of which extracted product image the infringement confidence value is determined. If there are more than one depiction of the product on the sales image, more than one extracted product image may be created, in particular such that for each depiction of the product, one product image is extracted. The product extracting algorithm may produce a crop of the sales the image exactly at the boundary of the depiction of the product. Alternatively, the product extracting algorithm image may crop the sales image such that the extracted product image comprises an area around the depicted product according to a defined geometric form. The geometric form may, for example be a rectangle. Using a defined geometric form, i.e., in particular always the same geometric form, may make the infringement predicting algorithm more reliable since it can be trained with the same form. It has been found that a defined geometric form of a rectangle can provide particularly reliable results, both from the product extracting algorithm and from the infringement predicting algorithm. Cropping at exactly around the boundary of the product depiction may make it even easier for the infringement predicting algorithm, since any other objects even very close to the product on the sales image may be cut away. On the other hand, this variant may pose greater difficulty in preparing the product extracting algorithm.

According to an embodiment, the product extracting algorithm is an algorithm based on an object detector algorithm, in particular a trained object detector algorithm. The object detector algorithm may preferably be based on a neural network approach. Preferably, the product extracting algorithm may be a YOLO algorithm ("You Only Look Once"). YOLO is a known object recognition algorithm that can be used for the identification of objects within an image. The YOLO algorithm was in particular described by Redmon et al. in "You Only Look Once: Unified, Real-Time Object Detection", arXiv: 1506.02640, 2015. For example, the YOLO may output a list of coordinates describing the circumference of the extracted product image within the sales image. In particular, in the case of a geometric rectangle form, the output may be a list of box coordinates. Furthermore, YOLO may output a confidence value. The confidence value may describe the confidence of a set of box coordinates actually containing a depiction of the product. It may be provided, that the extracted product image is created when the confidence is above a confidence threshold. Accordingly, extracted images that likely do not contain a depiction of the product may be thus discarded. It has been found that YOLO works particularly well for the purpose of the product extracting algorithm. Alternatively, the product extracting algorithm may be based on a region-based convolutional neural network (R-CNN) or on a segmentation algorithm, such as U-net. R-CNN is a machine learning model for object detection and U-net is a U-shaped encoder-decoder network. The algorithm may, for example, be trained by providing training data that comprise sales images and product images extracted from the sales images. For example, the product images of the training data may be extracted manually. Preferably, the product extracting algorithm is trained to only produce extracted images wherein a complete depiction of the product and/or of the part of the product that is protected by a design, preferably a complete front view or perspective view of the product and/or the part of the product that is protected by a design, is contained. Furthermore preferably, the product extracting algorithm is trained to only produce extracted images wherein the view of the product and/or the part of the product that is protected by a design, is not obstructed, e.g. by hand or other objects. It has been found that with these restrictions, the infringement predicting algorithm can work and be trained more reliable.

Advantageously, the infringement predicting algorithm is applied on the extracted product images. The infringement predicting algorithm thereby generates a subset of products that are predicted to be infringing. Hence, the subset in particular comprises the products that are predicted to be infringing and does not comprise the products that are predicted not to be infringing. The prediction may preferably be performed based on the respective extracted product image. Hence a product is in particular predicted to be infringing when the depiction of the product image is found to be infringing. Preferably, a product is predicted to be infringing as soon as any of the product images corresponding to the product is predicted to depict an infringing product. The infringement confidence value may be a predicted probability that the product depicted on the product image is infringing. The infringement prediction is based on the infringement confidence value, namely, the product is predicted to be infringing if the infringement confidence value exceeds a predetermined infringement threshold. The infringement confidence value may be stored. This may be useful, e.g. in order to help the user during the decision and/or to assess the quality of the infringement prediction algorithm. Optionally, the infringement confidence value may be discarded after the infringement prediction is determined.

Preferably, the infringement predicting algorithm is configured to have a high recall, if necessary at the cost of a lower precision. Preferably, the recall is higher than the precision. The recall may also be referred to as sensitivity. The recall is a measure for the probability that an actual infringement is determined to be an infringement. Hence, a higher value of the recall decreases the chance of missing an infringement. Preferably a recall of at least 85%, more preferably of more than 90% is used. It has been found, that with the inventive method a recall of 95% or more can be achieved. The precision gives the percentage of the determined infringement cases that are actually infringing. Hence, a higher value is generally better. However, a higher precision may be at the cost of a lower recall and vice versa. It has been found that, in order to provide a higher recall, a precision of below 60%, e.g. about 50%, may be feasible. The recall and precision can be adjusted by adjusting the infringement threshold.

Both the infringement confidence value and the infringement prediction are part of the infringement classification. The infringement classification may comprise further labels. For example, the infringement classification may comprise a label for each of a plurality of designs. In this embodiment, the infringement predicting algorithm has been trained to predict whether a product is infringing any of a plurality of protected designs. Thus, the infringement classification may comprise an infringement prediction and a confidence value for each of a plurality of designs. If the confidence value for any of the plurality of designs is above a pre-determined infringement threshold, a label (infringement label) indicating that this particular design is infringed may be provided, in particular added to the infringement classification. The infringement predicting algorithm may be trained such that the labels of the different designs are non-exclusive, i.e. several designs may be infringed by the same product. Alternatively, the algorithm may be so configured that the confidence values of the different designs add up to 1, which means the infringement labels are exclusive. The algorithm may further provide a design label indicating which of the plurality of protected designs is most likely to be infringed.

Advantageously, only the sales images and/or extracted product images from the subset of products that are predicted to be infringing are presented to a user. Hence, the number of images a user has to manually/personally check can be reduced. On the other hand, the user may still get to check the relevant and/or most relevant products with respect to a potential infringement. A filter may be provided that is configured to filter out any images that are not to be shown to the user. In particular, the filter may be configured not to show any images of a product that is determined not to be infringing. The filter may be adjustable by the user, in particular via a user interface (UI), e.g. by actuating a slider or button in a graphical user interface (GUI). The filter may, for example, be implemented in SQL queries. Implementation in SQL queries may allow for immediately showing an updated view when the user updates an infringement classification. For example, an extracted product image may be part of a cluster of images, e.g. images depicting the same product, and a labelling or adjustment of classification of the extracted product image leads to other images of the cluster now falling outside of applied filter criteria, e.g. are no more infringing or are infringing for another design. In one alternative, only the extracted product images may be shown to the user. In another embodiment, both, the sales images and the extracted product images may be shown to the user. For example, the sales image and all product images extracted from this sales image may be shown to the user. It is also conceivable that only the sales images are shown to the user. The user interface may provide an option for the user to show or blend out sales images and/or an option to show or blend out one, some, or all of the extracted product images. For example, one or several extracted product images may be shown to the user and the user may have the option to also let the sales image corresponding to a specific product image be shown. The user interface may have the option for the user to scroll through different sales images and/or through different product images. The user may have the option to select one extracted product image out of several extracted product images from one sales image, in order to set the ground truth infringement label. Preferably, the labelling of the product with the ground truth infringement label by the user is provided such that the user labels an extracted product image of the product. The ground truth infringement label is preferably used as reference in the following step(s), e.g. it determines whether the product is actually believed to be infringing. Optionally, the ground truth infringement label may be used to further train (or retrain) the infringement predicting algorithm. Preferably, the user is given the option to confirm the infringement prediction for all extracted product images of a sales image. This may in particular be advantageous for a retraining of the infringement predicting algorithm according to embodiments described herein, since the training thereby is done only on suitable images, on which the infringement is visible. Alternatively, a ground truth infringement label given to one product image by the user, may be automatically be extended to all other product images extracted from the sales image belonging to the same product, and to the sales image and the respective product.

Optionally, products that are determined to be non-infringing by the infringement predicting algorithm may be stored in an archive, preferably together with their corresponding images, (i.e., in particular sales images and/or extracted product images). The user interface may comprise the option for the user to select to also show images of products that are predicted to be non-infringing by the infringement predicting algorithm. Additionally and/or alternatively, the user may have the option to adjust the infringement threshold and/or to also show images that have an infringement confidence value lower than the original infringement threshold but higher than a further threshold selected by the user. Adjusting the infringement threshold or setting the further threshold may allow the user to see further images but at the same time to ensure that the additional images are the ones that are most likely to infringe out of the images that are predicted to be non-infringing. The user may than have the option to also set a ground truth infringement label for these products. This may be advantageous, for example, when only few infringements are found and the user has thus enough time to also go through more images that are less likely to infringe. It may also be advantageous to allow the user to confirm the quality of the infringement predicting algorithm (e.g. to check that the recall is not lower than expected or is not dropping over time, e.g. due to retraining) and/or to create more data with ground a truth infringement label. Additional data with a ground truth infringement label may for example be used to (re)train the infringement predicting algorithm.

Optionally, the user may be given the option to add an insufficient label to an extracted product image. This may indicate that the extracted product image is of insufficient quality. The insufficient label may in particular be used if the product image does not show the product sufficiently well to make a conclusion on its own. This may, for example, be the case because of bad image quality, because only a part of the product is shown, because the view-angle is unsuitable, and/or because the product is (partially) obstructed, e.g. by another object, on the image. Extracted product images that are labelled with the insufficient label may preferably be excluded from being used for training and/or retraining the infringement predicting algorithm. This may be advantageous, since training the infringement predicting algorithm is typically more efficient when the product is well-visible on the extracted product image. For example, training when only a small part of the shaver is visible may lead to the algorithm looking for features that are actually not relevant or only of little relevance.

Advantageously the set of product infringement information data comprising at least the ground truth infringement label and the sales address for each product confirmed to be infringing by the user is provided. Accordingly, the set comprises the ground truth infringement label as verified by the user. Hence, if the user is an IP expert, the set may have the reliability of a set determined by an IP expert, while at the same time, due to the filtering via the prediction of the infringement predicting algorithm, the workload of the user can be reduced. The set of product infringement information data may be part of a list, e.g. a takedown list. The method steps may be repeated, in particular at a later time. Repeating the method steps at a later time provides the possibility to monitor the internet, e.g. internet shops, for design infringement, over a longer period of time. For example, the method may be repeated in intervals of a few days up to a year or longer, preferably in intervals of 3 to 60 days.

According to an embodiment, the infringement predicting algorithm comprises a neural network that is trained to determine an infringement classification for product images based on training data comprising product images associated with at least one ground truth infringement label, the or each ground truth infringement label comprising information on whether the corresponding product has been classified as infringing or not-infringing by a user. A plurality of ground truth infringement labels may be related to a plurality of designs. The training may be performed as described with respect to the training method herein. The neural network may, for example, be an EfficientNet neural network (in particular model b3). It has been found that EfficientNet can work particularly well and reliable as infringement predicting algorithm. The EfficientNet network was introduced by Mingxing Tan and Quoc V. Le in "EfficientNet: Rethinking Model Scaling for Convolutional Neural Networks", arXiv: 1905.11946, 2019, revised 2020 and first released at https://github.com/keras-team/keras. Information about EfficientNet model b3 can also found at https://huggingface.co/google/efficientnet-b3.

According to an embodiment, the user interface provides the user with the option of giving a product a non-determinable label, in particular when the user finds that it is not possible to determine from the sales image or product image whether the product is infringing or non-infringing, wherein the set of product infringement information data further comprises at least the non-determinable label and the sales address for each product having the non-determinable label. Products with a non-determinable label may be added to a purchase list. Hence, products, for which it cannot be determined whether they are infringing based on the images alone may be purchased to allow the user to have a closer look.

According to an embodiment, the at least one design comprises a plurality of designs, wherein the user is allowed to set or confirm an infringement label for each of the plurality of designs, wherein the set of product infringement information data comprises a corresponding ground truth infringement label for at least one of the plurality of designs. For example, different parts or different features of the design may be protected by different designs (also referred to as design categories). In other embodiments, different models of the product may be protected by different designs. The user interface may comprise a corresponding input option for allowing the user to set or adjust an infringement label for each of the designs, for example a slider or button for each design which the user may actuate in order to classify the product as infringing one or several of the plurality of designs. In an embodiment, the infringement detection algorithm has been trained to predict whether a product is infringing any of a plurality of protected designs. Thus, the user may be presented with the algorithm's prediction and may confirm or discard the respective prediction, thereby setting ground truth infringement labels for one or several or each of the plurality of designs. These ground truth infringement labels may be used to train or retrain the infringement predicting algorithm to automatically assign a corresponding infringement label and/or infringement confidence value for each of the plurality of designs.

Optionally, the user may be provided with the opportunity to create new labels. For example, the user may add a new design which may be infringed by the products. Moreover, the user may add the information which of the plurality of designs is infringed. Thereby, the products may be categorized according to the design that is infringed or most likely infringed.

According to an embodiment, the method comprises an additional step of applying a duplicate detecting algorithm on each of the extracted product images, wherein the duplicate detecting algorithm identifies whether the product corresponding to the extracted product image is a duplicate of a reference product depicted on a reference image, in particular of a reference image stored in a product database, wherein the product database comprises reference images relating to reference products which have been previously classified as infringing or non-infringing by a user and having received a corresponding ground truth infringement label, and, if a duplicate is identified, assigns the ground truth infringement label of the reference product to the duplicate product, wherein duplicate products with a positive infringement label are added to the set of product infringement data without presenting them to the user, wherein, optionally, the set of product infringement information data comprises, for each infringing duplicate product, a duplicate label. Identifying whether the product corresponding to the extracted product image is a duplicate of a reference product depicted on a reference image may in particular comprise calculating a distance between both images and determining whether the distance is above a threshold, in particular a duplicate threshold, such that a duplicate is identified when the distance is not above the threshold.

Advantageously, the duplicate detecting algorithm may prevent the user from having to look at and check the same product multiple times. For example, the same product may be sold by multiple different internet shops and/or one internet shop may have multiple product pages selling the same product, e.g. a shop having a marketplace functionality where different sellers may sell products. The duplicate detecting algorithm can have the further advantage that it can handle the problem of internet shops changing their product pages, the address of the product pages or the order in which products are presented in a product search of the internet shop. Such measures of internet shops can make it difficult to determine whether a newly found product is actually a product that has been found previously, e.g. in a previous search. Herein, the duplicate detecting algorithm may allow to detect whether a product has already been found and classified before, without depending on a product page address or an order of search results. The application of the duplicate detecting algorithm may thus be particularly advantageous when potential infringements of at least one design are monitored over a period of time, e.g. by repeatedly checking for infringements. For example, the application of the duplicate detecting algorithm may allow in a second search to remove the products for which an action has been taken in a first search, in particular reducing the amount of manual review work for the user.

Advantageously the application of the duplicate detecting algorithm can be a complementary step to the application of the infringement predicting algorithm. With the application of both algorithms, it is possible, on the one hand, to reduce the number of new products the user has to check due to the infringement predicting algorithm and, on the other hand, to avoid that the user has to check products again that he already has checked and categorized due to the duplicate detecting algorithm. As a net effect the total number of images that the user has to check can thus be further reduced when compared to only applying one of the algorithms due to the application of the two complementary algorithms that take into account different aspects (namely, excluding already checked products and excluding products that are not infringing with high probability). Accordingly, it may be particularly advantageous to combine these two method steps. Specifically, any of the different variants of these two steps, as described herein, may be combined. Preferably, the duplicate detecting algorithm is applied before the infringement predicting algorithm. This may reduce the necessary computational work of the infringement predicting algorithm. However, it is also possible to apply the infringement predicting algorithm before the duplicate detecting algorithm.

Optionally, the user interface may comprise the option for the user to access products and/or product images corresponding to duplicates. For example, the user interface may comprise a duplicate infringing section. The duplicate infringing section may, for example, comprise a corresponding button, menu or tab. The user may use the duplicate infringing section to view the duplicates and check whether the duplicate detecting algorithm works as intended. The user may be given the option to correct falsely identified duplicates. The duplicate infringing section may also allow the user to check whether other extracted product images, which do not have a duplicate, also correspond to the same product. Furthermore, the user may set the ground truth for all the extracted product images of this duplicate. This may further speed up the creation of a large image database of infringing product images.

According to an embodiment, the duplicate detecting algorithm compares each of the product images with one or several reference images from the product database and determines a measure of similarity for each pair of compared images, wherein, when the measure of similarity is above a pre-determined duplicate threshold, the product corresponding to the compared sales image or product image is identified as a duplicate of the product depicted on the reference image. In an example, the similarity of the images may be determined by an image embedder that calculates a feature vector for each of the compared images. A Euclidian distance between the feature vectors of two image embeddings may be calculated, wherein the similarity is greater, the smaller the Euclidian distance. The measure of similarity may be the inverse value of the Euclidian distance, preferably normalized so that the maximum measure of similarity is 100%. Two images may be considered to be duplicated when the Euclidian distance is below a pre-determined threshold, or its reciprocal value is above a pre-determined duplicate threshold.

Preferably, the duplicate detecting algorithm is configured to have a high precision, if necessary at the cost of a lower recall. Preferably, the precision is higher than the recall. A higher value of the precision in particular decreases the chance of falsely identifying a duplicate that in reality is not a duplicate. Preferably a precision of at least 85%, more preferably of more than 90% is used. It has been found, that with the inventive method a recall of 95% or more can be achieved. The recall gives the percentage of the images that are identified not to be a duplicate while actually being a duplicate. Hence, a higher value is generally better. However, a higher precision may be at the cost of a lower recall and vice versa. It has been found that, in order to provide a higher precision, a recall of below 60%, e.g. about 50%, may be feasible. The recall and precision may be adjusted by adjusting the duplicate threshold.

According to one embodiment, the measure of similarity is determined based on template matching. Template matching is a type of algorithm that is generally known in the state of the art, wherein a location of a template image is searched and found in a larger image. For this, a template image is moved over an input image and the images are compared. It has been found that template matching can also be used analogously to check whether to extracted product images depict the same product. Using template matching for this purpose may have the advantage that the duplicate detecting algorithm may be used without having to train the duplicate detecting algorithm for a new product or product category. Preferably, the parameters of the template matching may be fine-tuned before the application with a new product category to achieve better results. For example, depending on a product and/or its shape, an extracted product image or image crop may be reduced even further to become a template. For example, an image crop, in particular the extracted product image, may be further cropped by overlaying it with a geometric form such as a rhombus. The geometric form may preferably be adapted to the shape of the product.

According to another embodiment, the duplicate detecting algorithm is a trained neural network, in particular a Siamese network, which is applied to each of the pair of compared images, and outputs a vector for each image, wherein the measure of similarity is determined based on the distance between the vectors outputted for each pair of compared images. The Siamese network may in particular be a single artificial neural network that is applied to two different input images or two identical neural network that are each applied to a different input image. Training data for the Siamese network may, for example, be generated by manually creating clusters of images that display the same product.

According to an embodiment, the reference images have been clustered by applying a clustering algorithm that searches for similarities among the reference images and that groups reference images that are similar together, wherein, within each group, a main reference image is determined, in particular the reference image that is most similar to all other reference images in this group, wherein the duplicate detecting algorithm is only applied to the main reference images of each group. Advantageously the clustering may speed up the process of applying the duplicate detecting algorithm, since every new product image only has to be compared to one of the images of the cluster. The clustering algorithm may use the duplicate detection algorithm or adaptations thereof in order to determine measures of similarity between the reference images.

According to an embodiment, extracted product images that have been presented to the user for confirmation are added to the product database together with the corresponding ground truth infringement label comprising information on whether the corresponding product has been classified as infringing or not by a user. Thus, advantageously, the product database used for duplicate detection may be expanded dynamically, allowing to also find duplicates to newly classified products.

In advantageous embodiments, a high precision of the duplicate detecting algorithm is combined with a high recall of the infringement predicting algorithm. The high precision of the duplicate detecting algorithm may be achieved at the cost of a lower recall, wherein the high recall of the infringement predicting algorithm may be achieved at the cost of a lower precision. Thereby, it can be assured that all potentially infringing products are captured by the method, and that all products that need to be manually checked by an IP expert are presented to the user. According to an embodiment, the infringement threshold is between 20% and 80%, preferably between 40% and 60% confidence, and the duplicate threshold is above 90% of the measure of similarity (for normalized confidence values and measure of similarity). Advantageously, these thresholds may provide a particularly reliable option, wherein the chance of missing infringing images is kept relatively small, while the workload of the user can, at the same time, still be reduced significantly.

According to an embodiment, the infringement predicting algorithm is automatically retrained, by using extracted product images that have been presented to the user for confirmation and the corresponding ground truth infringement label as retraining data. The retraining may be performed according to the training method of the infringement predicting algorithm as described herein. Advantageously, the ground truth infringement labels set by the user or several users may thus be used to further improve the infringement predicting algorithm dynamically over time. This may be particularly useful, when the method is repeated, e.g. after a time interval such as every few days or weeks.

According to an embodiment, an optical character recognition (OCR) algorithm is applied to the sales image or the extracted product image in order to filter out any product of a manufacturer that has the right to use the design, such that no further method steps of this method are applied to the product after the optical character recognition algorithm has filtered out the product, in particular such that the infringement predicting algorithm, and optionally the duplicate detecting algorithm, is/are not applied to the filtered-out product. Advantageously, the optical character recognition algorithm may thus allow to avoid having to work on products that are not infringing because the seller and/or manufacturer has the right to use the corresponding protected design. For example, the optical character recognition algorithm may be configured to recognize brand names or any other kind of brand. The corresponding product may be stored together with a recognition label indicating the result of the optical character recognition algorithm. The OCR algorithm may be applied directly after the product information has been received.

According to an embodiment, the step of receiving product information comprises applying a crawler algorithm, wherein the crawler algorithm searches a predefined part of the world wide web, in particular one or several predefined internet shops, with a search term related to the product, and extracts the product information from each search hit or from a predefined number of first-listed search hits. Advantageously, product information, in particular comprising the sales images, may thus be acquired automatically. Looking at predefined internet shops may allow to limit the search, thus requiring less powerful search engines and/or less extensive searches, while at the same time, it may be possible to search the most important shops. The internet shops may, for example, be predefined according to a user selection. For example, the user interface may comprise an option for the user to define the internet shops the crawler algorithm is to be applied on. The crawler algorithm may be an external algorithm. Alternatively, the crawler algorithm may be part of the computer program which causes a computer to execute this method. The crawler algorithm may be configured to find a product page on the internet shop(s) and download all images, in particular sales images, of corresponding to the internet address, in particular to the product URL, of this product page. The crawler algorithm may comprise at least two steps, wherein a first step is a query on the internet shop or on several internet shops and a second step is visiting product pages from the query result. In a more detailed example, in a first step, a query is fired at the internet shop, and in a second step, a response to the query is parsed and a list of product page URLs and corresponding sales images and/or product thumbnail images is extracted. In a third step, for each extracted product URL a check is made whether this URL has or has not already been collected. In a fourth step, the URL page is fetched if it is not determined in the third step to be already collected, and in a fifth step, the response is parsed and a list of product URLs is extracted. In a sixth step, the product information may be retrieved. The crawler algorithm may retrieve multiple query result pages. In particular the crawler algorithm may continue to repeat its steps until the product information from a predefined number of products and/or all products have been retrieved and/or at least checked in the case of already visited URLs. The computer interface may comprise an option for a user to schedule times at which the crawler algorithm is to be applied.

According to an embodiment, the method comprises an additional step of applying a relevance detecting algorithm on the at least one product image, wherein the relevance detecting algorithm determines a similarity of the product image with each of the at least one designs, wherein, when the similarity with all designs is below a relevance threshold, the product corresponding to the at least one product image is classified as non-relevant, wherein a product being associated with only non-relevant product images is discarded, in particular such that no further steps of this method are applied to the non-relevant product image after applying the relevance detecting algorithm. Advantageously this method step may thus enable to filter out products that are completely different from all of the protected designs. The relevance detecting algorithm may preferably be a binary classifier that either deems product images relevant or not relevant. The relevance detecting algorithm may preferably be a trained algorithm that is trained on a set of product images comprising relevant and non-relevant images together with relevance labels indicating a relevance of the individual images. The relevance detecting algorithm may have the same network structure or may be the same trained algorithm as the infringement detector, while having a different threshold. It has been found that the recall of the duplicate detector can be improved significantly by adding the relevance detecting algorithm. In one test, the recall could be improved from 41% to about 98% due to application of the relevance detecting algorithm.

According to an embodiment, a reverse image internet search is initiated for a product that is associated with a ground truth infringement label that indicates an infringement, wherein for images found via the reverse image internet search that are part of a product offer in a web shop, a set of product infringement information data is created that has the same infringement classification as the product on which the reverse image internet search is based. The reverse image internet search may be performed based on the product images and/or based on the sales images. Optionally, the reverse image internet search may be performed by an external search program. Results of the reverse image internet search may be stored in a database. Preferably, the results may comprise an internet address, in particular a URL, a screenshot, in particular of the webpage and/or of the product, and the image that has triggered the hit of the reverse image internet search on that internet address. Advantageously, it may thus be possible to use the search power of a reverse image internet search in order to find products that are offered and advertised with the same and/or very similar image as the product images and/or sales images. Thus, for example, most relevant internet shops may be first scanned systematically in order to determine which infringing products exist generally and then find all or most instances where this product is sold in the rest of the internet.

According to a second aspect of the invention, a computer-implemented method for detecting an infringement of at least one design protected by an intellectual property right is provided. The method comprises the following steps:
(a) receiving product information of each of a plurality of products, the product information comprising a sales address, in particular a product page internet address, and a sales image comprising a depiction of the product;
(b) for each of the plurality of products, applying a duplicate detecting algorithm on at least one of the sales image or an extracted product image, which is a part of the sales image and comprises the depiction of the product, wherein the duplicate detecting algorithm identifies whether the product corresponding to the sales image or the extracted product image is a duplicate of at least one reference product depicted on at least one reference image, the reference product having been previously classified as infringing by a user,
(c) providing a set of product infringement information data comprising at least the sales address for each product, which has been identified as a duplicate of a product having been previously classified as infringing by a user.

The duplicate detecting algorithm may optionally have the features and/or advantages as described above and generally in this description for the duplicate detecting algorithm in the context of the method according to the first aspect. For example, the duplicate detecting algorithm may be used together with the relevance detecting algorithm as described herein. Advantageously, the duplicate detecting algorithm may allow to reduce the workload of a user by reducing the number of images and/or products the user has to check manually. Hence, information about products that are already classified as infringing can be used on newly found product offers, e.g. on other product pages, to automatically asses that these other product offers are infringing as well. For example, the duplicate detecting algorithm may allow to detect the same product in two consecutive searches for infringing products, independent on the page and ranking in the results for a search. In particular, it allows in the second search to remove the products for which an action has been taken or is still in the process to be taken in a first search, reducing the amount of manual review work for the user and/or another person performing or demanding the takedown of infringing products. For example, if in a first search some infringing products are detected and measures to take these products down are initiated this action may still take quite some time, e.g. weeks or even months before the takedown is complete. A consecutive search may thus be performed before all the actions of the takedown are completed and the product may still be online and/or may be online on another product page. Since it is often difficult to perform a search such that products already found are automatically excluded, e.g. because the order of products may change, it may be difficult to automatically exclude these products from the first search in the second search. The method may tackle this problem via the duplicate detecting algorithm.

Preferably, the duplicate detecting algorithm is configured to have a high precision, potentially at the cost of a lower recall. Preferably, the precision is higher than the recall. A higher value of the precision in particular decreases the chance of falsely identifying a duplicate that actually is not a duplicate. Preferably a precision of at least 85%, more preferably of more than 90% is used. It has been found, that with the inventive method a recall of 95% or more can be achieved. The recall gives the percentage of the images that are identified not to be a duplicate while actually being a duplicate. Hence, a higher value is generally better. However, a higher precision may be at the cost of a lower recall and vice versa. It has been found that, in order to provide a higher precision, a recall of below 60%, e.g. about 50%, may be feasible.

Optionally, the duplicate detecting algorithm may be further configured to identify whether the product corresponding to the sales image or the extracted product image is a duplicate of at least one reference product depicted on at least one reference image, the reference product having been previously classified as non-infringing by a user. This may allow to further reduce the workload of the user, in that also products that have previously been determined to be non-infringing do not need to be manually checked again, e.g. when these products appear on another product page. Accordingly, the set of product infringement information data may comprise at least the sales address for each product, which has been identified as a duplicate of a product having been previously classified as infringing or non-infringing by a user. Optionally, if a duplicate is identified, the duplicate detecting algorithm assigns the ground truth infringement label of the reference product to the duplicate product. This option may make it easier to differentiate between duplicate products that are infringing and those that are non-infringing. Compared to the method according to the first aspect described herein, this alternative can be a lighter version, e.g. easier to implement and train. While this version without the infringement predicting algorithm may be a little less powerful, it has been found that even with this lighter version, a considerable reduction of a user's workload can be achieved.

The product information may, for example, be received from a database of product information or from any other source of data. The database of product information may preferably be updated regularly automatically or manually. Additionally or alternatively, the product information may be received (directly or indirectly) from a crawler algorithm as described herein. For receiving product information and for providing a set of product infringement information data the same considerations, features and advantages as with respect to the method including the infringement detecting algorithm may analogously apply to this method as well.

According to an embodiment, the reference image is stored in a product database, the product database comprising reference images relating to reference products which have been previously classified as infringing, or optionally non-infringing, by a user and have received a corresponding ground truth infringement label. The product database may thus have the function of a black list and/or reference list allowing to determine, whether a product is infringing. A black list of products that have been previously classified as infringing may be used in the computer-implemented method described herein to identify duplicates of the black-listed products and add them to the takedown list. The black list may be given to a takedown agent to identify duplicate products, or to check the takedown list produced by the method.

According to an embodiment, the method comprises the further step of
(d) providing a user interface allowing user input, the user interface presenting sales images and/or extracted product images of products that have not been identified as a duplicate to a user for classification, and allowing the user to label each product with a ground truth infringement label comprising information on whether the product has been classified as infringing or not-infringing by a user,
(e) storing the sales images and/or extracted product images of products that have been classified by the user, together with the assigned ground truth infringement labels and optionally the sales addresses, as reference products in the product database, and
(f) adding the products that have been classified as infringing by the user to the provided set of product infringement information data.

Advantageously, the information on what products are infringing or non-infringing as classified by the user may thus be used for the duplicate detector. Accordingly, the duplicate detector may automatically become more powerful over time and be updated to recognize the additional products that are revised by the user.

According to an embodiment, the user interface provides the user with the option of classifying a product as non-determinable, wherein the set of product infringement information data further comprises at least a non-determinable label and the sales address for each product which has been classified as non-determinable. Hence, when the user finds that it is not possible to determine from the sales image or product image whether the product is infringing or non-infringing, the user may select this label. Optionally, products with the non-determinable label may be added to a purchase list. Products from the purchase list may be purchased to allow a user to better assess whether they are infringing a protected design.

According to an embodiment, the method comprises the following further step: for each of the plurality of products, applying a redundancy detecting algorithm on the product information, wherein the redundancy detecting algorithm compares the sales address of the product with the sales addresses of reference products stored in the product database, the product database comprising product information of reference products which have been previously classified by a user and have received a corresponding ground truth infringement label or non-determinable label, wherein, if the redundancy detecting algorithm detects that the sales address of any one of the plurality of products is identical to the sales address of a reference product, the product is not added to the set of product infringement information data and is not presented to a user. Alternatively, if the redundancy detecting algorithm detects that the sales address of any one of the plurality of products is identical to the sales address of a reference product, the product is directly added to the set of product infringement information data or another set of product infringement information data having a redundancy label. The alternative may be useful, when assuming that a product which should already be taken down, is apparently still online and a further measure should be taken to ensure that the product will eventually be taken down. For example, the method may provide a condition according to which one of the alternatives is chosen. The condition may, for example, be an amount of time that has passed between first finding the product and finding it again under the same sales address. According to a minimum time threshold, the second alternative may be chosen if the amount of time is greater than the threshold.

According to an embodiment, the duplicate detecting algorithm compares the sales image or product image with one or several reference images from the product database and determines a measure of similarity for each pair of compared images, wherein, when the measure of similarity is above a pre-determined duplicate threshold, the product corresponding to the compared sales image or product image is identified as a duplicate of product depicted on the reference image.

According to an embodiment, the duplicate detecting algorithm is a trained neural network, in particular a Siamese network, which is applied to each of the pair of compared images, and outputs a vector for each image, wherein the measure of similarity is determined based on the distance between the vectors outputted for each pair of compared images. The Siamese network may in particular be a single artificial neural network that is applied to two different input images or two identical neural network that are each applied to a different input image. Training data for the Siamese network may, for example, be generated by manually creating clusters of images that display the same product. It has been found that a Siamese network may be particularly well-suited both for training as well as in terms of reliability.

According to an embodiment, the measure of similarity is determined based on template matching. Advantageously, template matching may be used to check whether to extracted product images depict the same product. Using template matching for this purpose may have the advantage that the duplicate detecting algorithm may be used without having to train the duplicate detecting algorithm for a new product or product category. Preferably, the parameters of the template matching may be fine-tuned before the application with a new product category to achieve better results.

According to an embodiment, the reference images have been clustered by applying a clustering algorithm that searches for similarities among the reference images and that groups reference images that are similar together, wherein, within each group, a main reference image is determined, in particular the reference image that is most similar to all other reference images in this group, wherein the duplicate detecting algorithm is only applied to the main reference images of each group. Advantageously the clustering may speed up the process of applying the duplicate detecting algorithm, since every new product image only has to be compared to one of the images of the cluster. The clustering algorithm may use the duplicate detection algorithm or adaptations thereof in order to determine measures of similarity between the reference images.

According to an embodiment, prior to applying the duplicate detecting algorithm, a product extracting algorithm is applied on the sales image, wherein the output of the product extracting algorithm is at least one extracted product image that is a part of the sales image, the at least one extracted product image comprising the depiction of the product, wherein the duplicate detecting algorithm is applied on the at least one extracted product image.

The product extracting algorithm may produce a crop of the sales the image exactly at the boundary of the depiction of the product. Alternatively, the product extracting algorithm image may crop the sales image such that the extracted product image comprises an area around the depicted product according to a defined geometric form. The geometric form may, for example be a rectangle. All advantages and features as described with respect to the product extracting algorithm with respect to the method according to the other aspect may be applied analogously to this product extracting algorithm. Without the product extracting algorithm, the duplicate detecting algorithm may in particular be applied directly on the sales images. Hence, the overall method may be simpler in this variant, since not image cropping or other extraction is needed. This may in particular be useful, if different product pages use the same or very similar sales image for the same product. By using the product extracting algorithm, the overall process may be more powerful and precise. In particular the method may be less dependent on having similar sales images.

According to an embodiment, the set of product infringement information is added to a takedown list, for each product, which has been assigned an infringement label indicating an infringement, and/or wherein the set of product infringement information is added to a gather-information list, when it comprises the non-determinable label. Advantageously, the takedown list may, for example, be used by a takedown agent to assess which products are to be taken down. Products form the gather-information may, for example, be purchased to allow the user to have a closer look at the product in order to assess a possible infringement.

According to another aspect, a computer program is provided. The computer program comprises instructions which, when the program is executed by a computer, cause the computer to carry out one or several of the methods according to the various aspects described herein. The instructions may comprise any of the method steps and their variants as described herein. The computer program may be stored on a data storage medium, in particular a non-volatile data storage medium. The computer program may comprise a user interface, in particular a user interface as described herein according to any or several of the described embodiments. The user interface may comprise an option for a user to activate a training method according to any or several of the training methods described herein. The user interface may comprise an infringement section. The infringement section may be configured to enable the user to perform the user actions as described in step (d) of the computer-implemented method for detecting infringements, and optionally all related steps. The user interface may comprise different sections, e.g. accessible by tabs, each tab allowing different user actions. One overview section of the user interface may comprise at least one list of datasets that are to be checked by the user in order to confirm infringements. Optionally, the overview section may comprise a list of datasets that have already been checked by the user. Clicking on a button indicating a dataset may lead the user to the infringement section showing the corresponding dataset.

According to another aspect, a computer with internet access having installed thereon a computer program as described herein and, optionally, a data storage comprising a product database as described herein is provided. The data storage may preferably be a permanent storage. The data storage may be configured to store both image data, e.g. sales images and extracted product images, and metadata such as product information, infringement classification and/or product infringement information data. The data storage may optionally comprise the product database and/or the training database. The data storage may be implemented by means of an SQL type of database and/or by means of a blob storage. For example, the SQL type of database may be used to store the metadata for images and product URLs. The blob storage may be used for storing the images themselves.

According to another aspect, a method for training a neural network, in particular a convolutional neural network, is provided. Preferably, the neural network is trained to be an infringement predicting algorithm or part of an infringement algorithm, in particular as described herein. The training method comprises the following steps:
(a) providing a training database comprising training data that contain product images that are each associated with a ground truth infringement label,
(b) training the neural network with the training database to determine an infringement classification comprising an infringement confidence value for product images.

The infringement predicting algorithm may be as described herein. It may be trained to different product categories, wherein a "product category" may designate a type of product that can be searched by search terms, such as "shaver" or "electrical toothbrush".

It has been found that an EfficientNet neural network (in particular model b3) can be particularly well-suited to be trained and/or used as infringement predicting algorithm. EfficientNet is a convolutional neural network. The EfficientNet network was introduced by Mingxing Tan and Quoc V. Le in "EfficientNet: Rethinking Model Scaling for Convolutional Neural Networks", arXiv: 1905.11946, 2019, revised 2020 and first released at https://github.com/keras-team/keras. Information about EfficientNet model b3 can also found at https://huggingface.co/google/efficientnet-b3.

In order to provide training data, sales images of products that are in the same category as the protected designs may be downloaded from internet shops. It has been found that 1000 to 2000 images can be sufficient to provide a good training quality. The downloading may be performed with a crawler algorithm as described herein. Preferably, the extracted product images may be generated either manually by a user or by the product extracting algorithm in order to provide the product images for training. The ground truth infringement label is preferably set by a user. The user interface may comprise a corresponding option to set the ground truth infringement label for every product image. Optionally, the user may be given the option to add an insufficient label or undecided label to a product image. The insufficient or undecided label may in particular be used if the product image does not show the product sufficiently well to make a conclusion on its own. Product images that are labelled with the insufficient label may preferably be excluded from being used for training the infringement predicting algorithm.

Optionally, the training may comprise verifying the performance of the infringement predicting algorithm. For example, for verification, the trained algorithm may be applied on additional product images and the output may be presented to a user. The user may then have the option to decide whether the prediction is sufficient. For example, the user may be given the option to verify the infringement prediction via the user interface, e.g. by labelling each product with a ground truth infringement label comprising information on whether the product has been classified as infringing or not-infringing by the user, and wherein a precision and/or recall of the infringement predicting algorithm is determined. Optionally, the training may be continued with additional training data when the precision and/or recall is not high enough.

The training method and the method for detecting infringements may be combined into one method, in particular such that the method steps for training are performed before the method steps for detecting infringements. This may allow to build up a way of infringement detection for a new product and then, consecutively apply the trained algorithm(s). Optionally the method may also comprise training the product extracting algorithm and/or the duplicate algorithm as explained herein.

According to another aspect, a method for training a duplicate detecting algorithm, in particular a neural network, for a product category is provided. The method comprises the following steps:
(a) providing a training database comprising training data that comprises a plurality of clusters, each cluster comprising a plurality of training images depicting the same product or products that are duplicates of each other, wherein at least some clusters comprise training images of products that are not duplicates of each other.
(b) training the neural duplicate detecting algorithm with the training database to identify duplicates among the training images.

The duplicate detecting algorithm may be as described herein. It may be trained to different product categories. The training database may, for example, be prepared by annotating pairs of extracted images or sales images whether they are duplicates. The annotation may, for example, be performed manually by a user. Preferably the neural network is a Siamese network.

According to an embodiment, the method for training a duplicate detecting algorithm comprises the following additional steps:
- providing a user interface allowing user input, the user interface presenting sales images and/or extracted product images of products and allowing the user to label each image with a ground truth duplicate label comprising information on whether the depicted product is a duplicate of a reference product and of which reference product it is a duplicate of, and
- creating the training database by storing the sales images and/or extracted product images of products that have been classified by the user in the training database and clustering the images together based on the assigned ground truth duplicate labels as training images.

The features and advantages of different embodiments can be combined. The features and advantages of one aspect of the invention, e.g., the method, may be applied to the other aspects, e.g., computer program and the data processing system, and vice versa.

### BRIEF DESCRIPTION OF THE DRAWINGS

The invention shall now be illustrated by means of embodiments with reference to the attached drawings, in which:
Fig. 1 shows a computer-implemented method for detecting infringements of at least one design protected by an intellectual property right according to an embodiment of the invention;
Fig. 2 shows a computer-implemented method for detecting infringements of at least one design protected by an intellectual property right according to an embodiment of the invention;
Fig. 3 shows a schematic representation of the method for detecting infringements of at least one design protected by an intellectual property right according to an embodiment of the invention;
Fig. 4 shows a schematic example of a sales image depicting different variants of a product that is a shoe;
Fig. 5 shows a representation of a user interface according to an embodiment of the inventio;
Fig. 6 shows a method for training a neural network, in particular a convolutional neural network according to an embodiment of the invention;
Fig. 7 shows a method for training a duplicate detecting algorithm for a product category according to an embodiment of the invention;
Fig. 8 shows a method for training a duplicate detecting algorithm for a product category according to another embodiment of the invention; and
Fig. 9 shows a computer-implemented method for detecting an infringement of at least one design protected by an intellectual property right according to an embodiment of the invention.

### DESCRIPTION OF EMBODIMENTS

Throughout the Figures, the same or corresponding features/elements of the various embodiments are designated with the same reference numbers.

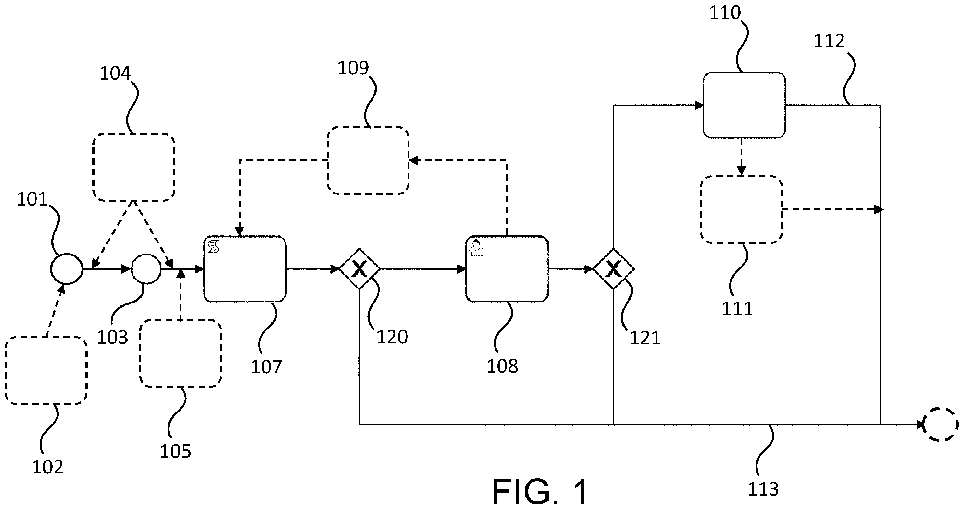

Fig. 1 shows a computer-implemented method for detecting infringements of at least one design protected by an intellectual property right according to an embodiment of the invention. The method comprises a first step 101 of receiving product information about each of a plurality of products, the product information comprising a sales address, such as a product page internet address, and a sales image comprising a depiction of the product. This step 101 may optionally comprise a step 102 of applying a crawler an algorithm. The crawler algorithm searches a predefined part of the world wide web, such as one or several internet shops, with a search term related to the product, and extracts the product information from each search hit or from a predefined number of first-listed search hits. In a further step 103, for each of the products, a product extracting algorithm is applied on the corresponding sales image. The output of the product extracting algorithm is at least one extracted product image that is a part of the sales image such the at least one extracted product image comprises the depiction of the product. In particular, the extracted product images may be image crops. In an optional step 104, either before or after the application of the product extracting algorithm, an optical character recognition algorithm is applied to the sales image or the extracted product image in order to filter out any product of a manufacturer that has the right to use the design. According to this optional step 104, no further method steps of this method are applied to the product after the optical character recognition algorithm has filtered out the product, in particular such that the infringement predicting algorithm is not applied to the filtered-out product. A further optional step 105 is the application of a relevance detecting algorithm on the at least one product image. The relevance detecting algorithm determines a similarity of the product image with each of the at least one designs, and, when the similarity with all designs is below a relevance threshold, the product corresponding to the at least one product image is classified as non-relevant. A product that is associated with only non-relevant product images is discarded. In particular, preferably, no further steps of this method are applied to non-relevant product images after applying the relevance detecting algorithm. In a further step 107 a trained infringement predicting algorithm is applied on each of the extracted product images to generate a subset of products predicted to be infringing. The output of the infringement predicting algorithm comprises an infringement classification and the infringement classification comprises an infringement confidence value and an infringement prediction of whether the product infringes the at least one design. The product is predicted to be infringing if the infringement confidence value exceeds a predetermined infringement threshold. For example, the infringement threshold may be chosen such that it is at a confidence value of 50%. If there are several product images for a product, the image that has the highest confidence value may preferably be used to determine whether the confidence value is above the infringement threshold. If there are several designs that may be infringed, the confidence value may preferably be determined for each design separately, and the highest determined confidence value may preferably be used to determine, whether an infringement is predicted. Preferably the infringement predicting algorithm may comprise a neural network that is trained to determine an infringement classification for product images based on training data comprising product images associated with a ground truth infringement label. The ground truth infringement label comprises information on whether the corresponding product has been classified as infringing or not-infringing by a user. In a further step 108 sales images and/or extracted product images are presented to a user via a user interface. Only images from the subset of products that are predicted to be infringing are presented to the user via a user. A filter algorithm 120 may be applied to determine whether each product has been predicted to be infringing to ensure that only the products that are predicting to be infringing are presented to the user. The user interface comprises menu options that allow the user to confirm the infringement prediction via the user interface. The user may thus decide whether the product is actually infringing or not. Based on the confirmation of the infringement prediction or a corresponding negative confirmation, i.e. negation, of the infringement prediction by the user, each product is labelled with a ground truth infringement label comprising information on whether the product has been classified as infringing or not-infringing by a user. Optionally, the user interface may provide the user with the option of giving a product a non-determinable label. In particular, when the user finds that it is not possible to determine from the sales image or product image whether the product is infringing or non-infringing, the user may select this label. Further optionally, when the at least one design comprises a plurality of designs, the user is may be allowed by the user interface, e.g. by a menu option, to set or adjust a design label indicating which design is infringed. In a further step 110 a set of product infringement information data is provided. The set of product infringement information data comprises at least the ground truth infringement label and the sales address for each product confirmed to be infringing by the user. A further filter algorithm 121 may be applied to determine whether a product has been confirmed to be infringing to ensure that only the products that are confirmed to be infringing are added to the set of product infringement information data. Optionally, the set of product infringement information data may further comprise at least the non-determinable label and the sales address for each product having the non-determinable label. Further optionally, if a design label is assigned, the set of product infringement information data may further comprise the design label for each product. In a further optional step 111, a reverse image internet search is initiated for a product that is associated with a ground truth infringement label that indicates an infringement. In this step 111, for images found via the reverse image internet search that are part of a product offer in a web shop, a set of product infringement information data is created that has the same infringement classification as the product on which reverse image internet search is based. Advantageously the reach of the method may thus be expanded, in particular allowing to find further internet addresses where a product confirmed to be infringing is sold. According to an optional step 112, the products that are confirmed to be infringing may be added to a takedown list. Additionally or alternatively, according to an optional step, images that are non-infringing may be stored on a non-infringing list. Further optional, products with the non-determinable label may be added to a purchase list. Products from the purchase list may be purchased to allow a user to better assess whether they are infringing a protected design. According to a further optional step 109, the infringement predicting algorithm may be automatically retrained. For this purpose, extracted product images that have been presented to the user for confirmation and the corresponding ground truth infringement label may be used as retraining data. The method may be repeated at a later time in order to find more infringing products, in particular infringing products that have been added to shops in the meantime. In particular the method may than be applied by using the retrained infringement predicting algorithm.

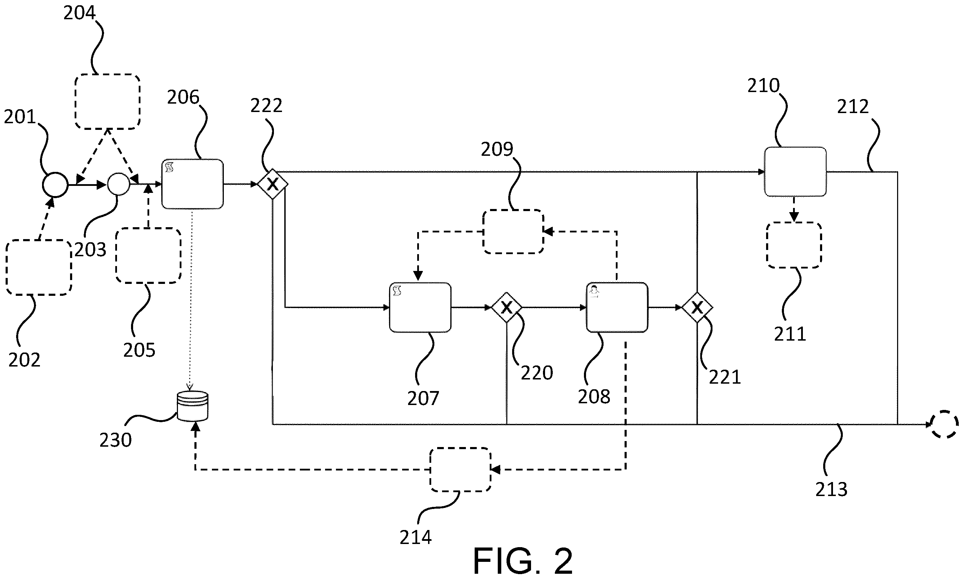

Fig. 2 shows a computer-implemented method for detecting infringements of at least one design protected by an intellectual property right according to an embodiment of the invention. The method comprises a first step 201 of receiving product information about each of a plurality of products, the product information comprising a sales address, such as a product page internet address, and a sales image comprising a depiction of the product. This step 201 may optionally comprise a step 202 of applying a crawler a crawler algorithm. The crawler algorithm searches a predefined part of the world wide web, such as one or several internet shops, with a search term related to the product, and extracts the product information from each search hit or from a predefined number of first-listed search hits. In a further step 203, for each of the products, a product extracting algorithm is applied on the corresponding sales image. The output of the product extracting algorithm is at least one extracted product image that is a part of the sales image such the at least one extracted product image comprises the depiction of the product. In particular, the extracted product images may be image crops. In an optional step 204, either before or after the application of the product extracting algorithm, an optical character recognition algorithm is applied to the sales image or the extracted product image in order to filter out any product of a manufacturer that has the right to use the design. According to this optional step 204, no further method steps of this method are applied to the product after the optical character recognition algorithm has filtered out the product, in particular such that the infringement predicting algorithm (in step 207) and the duplicate detecting algorithm (in step 206) are not applied to the filtered-out product. A further optional step 205 is the application of a relevance detecting algorithm on the at least one product image. The relevance detecting algorithm determines a similarity of the product image with each of the at least one designs, and, when the similarity with all designs is below a relevance threshold, the product corresponding to the at least one product image is classified as non-relevant. A product that is associated with only non-relevant product images is discarded. In particular, preferably, no further steps of this method are applied to non-relevant product images after applying the relevance detecting algorithm. In a further step 206, a duplicate detecting algorithm is applied on each of the extracted product images. The duplicate detecting algorithm identifies whether the product corresponding to the extracted product image is a duplicate of a reference product depicted on a reference image stored in a product database 203. The product database comprises reference images relating to reference products which have been previously classified as infringing or non-infringing by a user and have received a corresponding ground truth infringement label. If a duplicate is identified, the duplicate detecting algorithm assigns the ground truth infringement label of the reference product to the duplicate product. Optionally the reference images may be clustered. The clustering may be achieved by applying a clustering algorithm that searches for similarities among the reference images and that groups reference images that are similar together. For the clustering, within each group, a main reference image may be determined, in particular the reference image that is most similar to all other reference images in this group. Preferably, the duplicate detecting algorithm is only applied to the main reference images of each group. Images that are found not to be duplicates are further processed in the next step 207 by the infringement predicting algorithm, see step 207. Images that are duplicates and infringing are added to the set of product infringement information data, see step 210. Images that are duplicates and non-infringing may optionally be stored in a corresponding non-infringing list, see step 213, or may be discarded. A filter algorithm 222 may be applied to decide what to do with each image depending on the output of the duplicate detecting algorithm. In an exemplary test, applying the duplicate detecting algorithm to products of the product category shaver, a precision of 96% could be achieved with a recall of more than 40%. With a different infringement threshold, a precision of 92% with a recall of more than 58% could be achieved. The precision can be increased significantly if a relevance-detecting algorithm as described herein is applied. In a further step 207 a trained infringement predicting algorithm is applied on each of the extracted product images to generate a subset of products predicted to be infringing. The output of the infringement predicting algorithm comprises an infringement classification and the infringement classification comprises an infringement confidence value and an infringement prediction of whether the product infringes the at least one design. The product is predicted to be infringing if the infringement confidence value exceeds a predetermined infringement threshold. In tests of performing this method, a precision of 51,2% could be achieved together with a recall of 95,0%. Exemplary tests were performed at an infringement threshold of 1,7% on products of the product category shaver. For the purpose of this test, the method has been applied on more than 6000 images, where the number of true negatives was 5739, the number of false negatives was 12, the number of false positives was 217, and the number of true positives was 228. If there are several product images for a product, the image that has the highest confidence value may preferably be used to determine whether the confidence value is above the infringement threshold. If there are several designs that may be infringed, the confidence value may preferably be determined for each design separately, and the highest determined confidence value may preferably be used to determine, whether an infringement is predicted. Preferably the infringement predicting algorithm may comprise a neural network that is trained to determine an infringement classification for product images based on training data comprising product images associated with a ground truth infringement label. The ground truth infringement label comprises information on whether the corresponding product has been classified as infringing or not-infringing by a user. In a further step 208 sales images and/or extracted product images are presented to a user via a user interface. Only images from the subset of products that are predicted to be infringing are presented to the user via a user. A filter algorithm 220 may be applied to determine whether each product has been predicted to be infringing to ensure that only the products that are predicting to be infringing are presented to the user. The user interface comprises menu options that allow the user to confirm the infringement prediction via the user interface. The user may thus decide whether the product is actually infringing or not. Based on the confirmation of the infringement prediction or a corresponding negative confirmation, i.e. negation, of the infringement prediction by the user, each product is labelled with a ground truth infringement label comprising information on whether the product has been classified as infringing or not-infringing by a user. Optionally, the user interface may provide the user with the option of giving a product a non-determinable label. In particular, when the user finds that it is not possible to determine from the sales image or product image whether the product is infringing or non-infringing, the user may select this label. Further optionally, when the at least one design comprises a plurality of designs, the user is may be allowed by the user interface, e.g. by a menu option, to set or adjust a design label indicating which design is infringed. In a further step 210 a set of product infringement information data is provided. The set of product infringement information data comprises at least the ground truth infringement label and the sales address for each product confirmed to be infringing by the user. A further filter algorithm 221 may be applied to determine whether a product has been confirmed to be infringing by a user to ensure that only the products that are confirmed to be infringing are added to the set of product infringement information data. Duplicate products with a positive infringement label are added to a set of product infringement data without presenting them to the user. Optionally, the set of product infringement information data may comprise a duplicate label for each infringing duplicate product. Optionally, the set of product infringement information data may further comprise at least the non-determinable label and the sales address for each product having the non-determinable label. Further optionally, if a design label is assigned, the set of product infringement information data may further comprise the design label for each product. In a further optional step 211, a reverse image internet search is initiated for a product that is associated with a ground truth infringement label that indicates an infringement. In this step 211, for images found via the reverse image internet search that are part of a product offer in a web shop, a set of product infringement information data is created that has the same infringement classification as the product on which reverse image internet search is based. Advantageously the reach of the method may thus be expanded, in particular allowing to find further internet addresses where a product confirmed to be infringing is sold. According to an optional step 212, the products that are confirmed to be infringing may be added to a takedown list. Additionally or alternatively, according to an optional step images that are non-infringing may be stored on a non-infringing list. Further optional, products with the non-determinable label may be added to a purchase list. Products from the purchase list may be purchased to allow a user to better assess whether they are infringing a protected design. According to a further optional step 209, the infringement predicting algorithm may be automatically retrained. For this purpose, extracted product images that have been presented to the user for confirmation and the corresponding ground truth infringement label may be used as retraining data. In a further optional step 214, extracted product images that have been presented to the user for confirmation in step 207 are added to the product database 230 together with the corresponding ground truth infringement label comprising information on whether the corresponding product has been classified as infringing or not by a user. The method may be repeated at a later time in order to find more infringing products, in particular infringing products that have been added to shops in the meantime. In particular the method may than be applied with the updated database 230 and/or the retrained infringement predicting algorithm.

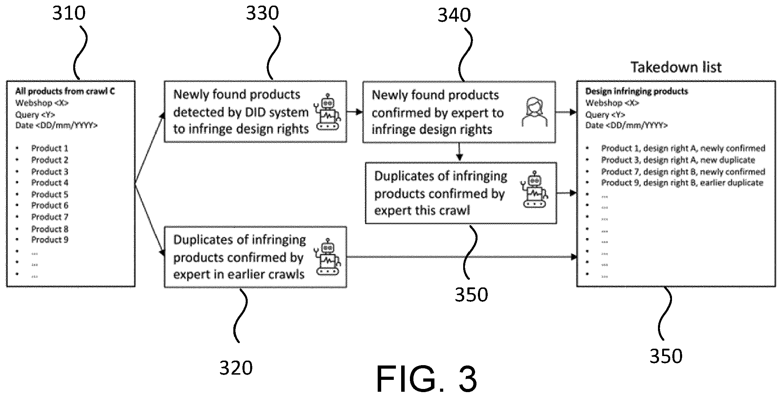

Fig. 3 shows a schematic representation of the method for detecting infringements of at least one design protected by an intellectual property right according to an embodiment of the invention. In a first step 310, product information of products with corresponding images are received from a crawler algorithm. In this embodiment the products information comprises an identification of an internet web shop, the product has been found in, an identification of a query that has been applied by the crawler, and the date the crawl has been performed on. In a further step 320, a duplicate detecting algorithm is applied and products that are duplicates to infringing products of previous crawls are added to a takedown list. In a further step 330, a trained infringement predicting algorithm is applied and products that are predicted to be infringing are determined. In a further step 340, products are presented to a user, in this case an IP expert, and the user confirms whether the products are infringing. In a further step 350, also duplicates of infringing images of this current crawl are detected by the duplicate detecting algorithm and products that are duplicates to infringing products of this current crawl are added to the takedown list. The takedown list comprises all the found products that are infringing a protected design. It further comprises product infringement information data comprising an internet web shop the product is from, information on the query of the crawler algorithm on this shop, the date of the crawl, as well as a list of infringing products together with information on which design is infringed, and whether the product is a duplicate.

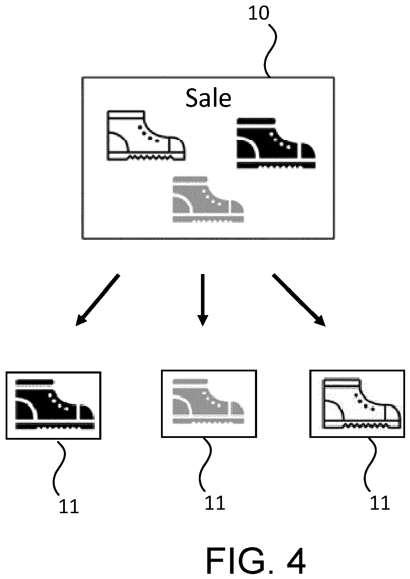

Fig. 4 shows a schematic example of a sales image 10 depicting different variants of a product that is a shoe. In this example the different variants vary with respect to a color of the product. Furthermore, extracted product images 11 are shown that may have been extracted by a product extracting algorithm according to an embodiment of the invention. Each extracted product image 11 comprises a depiction of one variant of the shoes depicted in the sales image 10. The extracted product images 11 have been cropped from the sales image 10 such that the extracted product image comprises an area around the depicted product according to a defined geometric form of a rectangle.

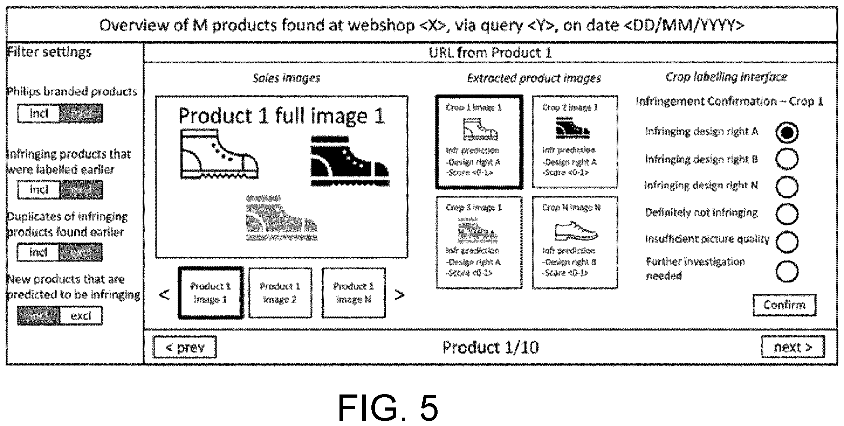

Fig. 5 shows a representation of a user interface according to an embodiment of the invention. The user interface comprises a menu on the left, where the user can adapt different filter settings that determine which products are shown to the user. For example, the user may filter out any products that are products of his company or the company he represents (in this example "Philips"). This functionality may be generalized to any products that are allowed to use a design or several designs, e.g. due to a license or due to the manufacturer/seller being the proprietor of the IP right. Corresponding products may be determined by optical character recognition algorithm according to the invention. Furthermore, the user may filter products that he has already confirmed or labelled. For example, the user may want to revise his previous choices. A further filter is the option to show duplicates of infringing products found earlier. For example, the user may want to check whether the duplicate detecting algorithm works as intended. Another filter option is to show any new products that are predicted by the infringement predicting algorithm. New products may in particular be products that have not been confirmed by the user, yet. This filter option may, for example, be useful if the user wants to only check duplicate products and therefore filter out any new products coming from the infringement predicting algorithm. On the left of the central area, there is shown a sales image. In this example, the sales image shows three variants of a product each variant having a different color. Below the sales image is a scroll menu where the user may choose which sales image of a product is to be shown. There may be a plurality of sales images for one product. Hence the user may also choose of different sales images of a product. At the bottom of the user interface there is a scroll menu where a user may switch between different products, e.g. different products that have been predicted to be infringing by the infringement predicting algorithm and have not yet been confirmed by the user. On the right of the shown sales image, there is a list of extracted product images corresponding to the currently show sales image. The user has the option to select one of the product images by clicking on it. For each product image there is shown an infringement prediction of the infringement predicting algorithm comprising a score representative for the confidence value of this image as well as information which design right is most likely to be infringed based on this image. On the right, in the crop labelling interface, the user may make a selection in order to confirm the prediction or apply a label of his own decision for the currently selected product image. The user may select whether one of several particular designs (here design A, B, or N) is infringed, whether there is no infringement ("Definitely not infringing"), or whether further information is needed to make a decision ("Further investigation needed"). Furthermore, the user has the option to indicate that the extracted product image is of insufficient picture quality. When this option is selected, the image is not used for (re)training the infringement predicting algorithm. This may, for example, be useful when the image only shows part of the product so that essential features of a design may not be determined. Hence, using this image for training may be detrimental, since the algorithm could be misled into prioritizing the wrong aspects instead of the relevant features of a design. A confirm button allows the user to confirm his decision after having selected the desired options.

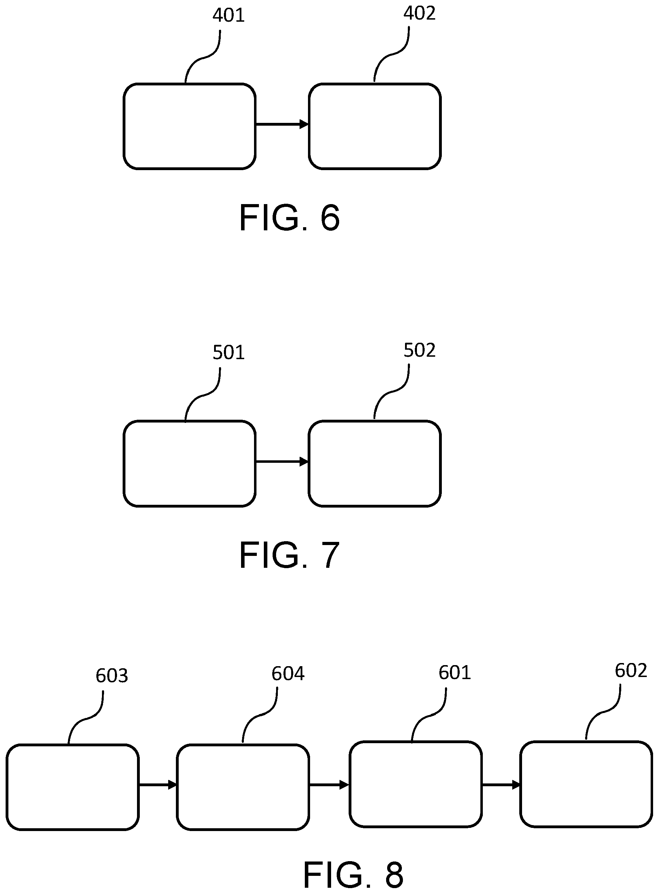

Fig. 6 shows a method for training a neural network, in particular a convolutional neural network. The method comprises a first step 401 of providing a training database comprising training data that contain product images that are each associated with a ground truth infringement label. For this purpose, sales images of products that are in the same category as the protected designs may be downloaded from internet shops. The downloading may, for example, be performed with a crawler algorithm, e.g. a crawler algorithm that is also used in the method for detecting infringements. Extracted product images may be generated either manually by a user or by the product extracting algorithm in order to provide the product images for training. The ground truth infringement label is preferably set by a user. In a further step 402, the neural network is trained with the training database to determine an infringement classification that comprises an infringement confidence value for product images.

Fig. 7 shows a method for training a duplicate detecting algorithm, in particular a neural network, for a product category, according to an embodiment of the invention. The method comprises a first step 501 of providing a training database comprising training data that comprises a plurality of clusters, each cluster comprising a plurality of training images depicting the same product or products that are duplicates of each other. At least some clusters comprise training images of products that are not duplicates of each other. In a further step 502, the neural duplicate detecting algorithm is trained with the training database to identify duplicates among the training images.

Fig. 8 shows a method for training a duplicate detecting algorithm, in particular a neural network, for a product category, according to another embodiment of the invention. In a first step 603, a user interface is provided that allows user input. The user interface presents sales images and/or extracted product images of products and allows a user to label each image with a ground truth duplicate label comprising information on whether the depicted product is a duplicate of a reference product and of which reference product it is a duplicate of. In a further step 604 a training database is created by storing the sales images and/or extracted product images of products that have been classified by the user in the training database and clustering the images together based on the assigned ground truth duplicate labels as training images, such that each cluster comprises a plurality of training images depicting the same product or products that are duplicates of each other and that at least some clusters comprise training images of products that are not duplicates of each other. In a further step 601 the training database is provided. In a further step 602, the neural duplicate detecting algorithm is trained with the training database to identify duplicates among the training images.

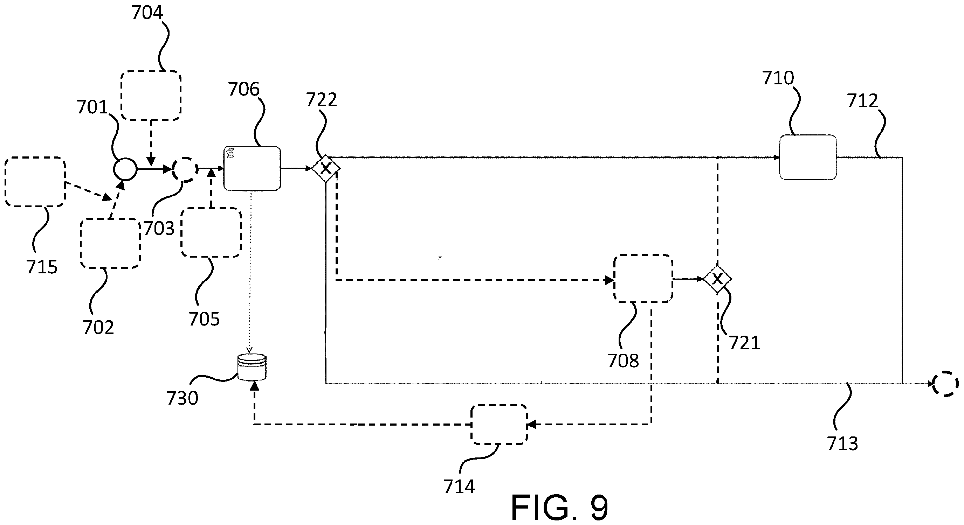

Fig. 9 shows a computer-implemented method for detecting an infringement of at least one design protected by an intellectual property right according to an embodiment of the invention. The method comprises a first step 701 of receiving product information of each of a plurality of products, the product information comprising a sales address such as a product page internet address and a sales image comprising a depiction of the product. Optionally, this step 701 may optionally comprise a step 702 of applying a crawler a crawler algorithm. The crawler algorithm searches a predefined part of the world wide web, such as one or several internet shops, with a search term related to the product, and extracts the product information from each search hit or from a predefined number of first-listed search hits. In an optional step 715, a redundancy detecting algorithm may be applied on the product information for each of the plurality of products. The redundancy detecting algorithm compares the sales address of the product with the sales addresses of reference products stored in the product database, the product database comprising product information of reference products which have been previously classified by a user and have received a corresponding ground truth infringement label or non-determinable label. If the redundancy detecting algorithm detects that the sales address of any one of the plurality of products is identical to the sales address of a reference product, the product is not added to the set of product infringement information data and is not presented to a user. Alternatively, the products may be added to a set of redundant product infringement information data. This set may be used to find products that should already have been taken down previously, but are still online. In an optional step 703, for each of the products, a product extracting algorithm may be applied on the corresponding sales image. The output of the product extracting algorithm is at least one extracted product image that is a part of the sales image such the at least one extracted product image comprises the depiction of the product. In an optional step 704, either before or after the application of the product extracting algorithm, an optical character recognition algorithm is applied to the sales image (or the extracted product image) in order to filter out any product of a manufacturer that has the right to use the design. According to this optional step 704, no further method steps of this method are applied to the product after the optical character recognition algorithm has filtered out the product, in particular such that the duplicate detecting algorithm (in step 706) is not applied to the filtered-out product. A further optional step 705 is the application of a relevance detecting algorithm on the at least one product image. The relevance detecting algorithm determines a similarity of the product image with each of the at least one designs, and, when the similarity with all designs is below a relevance threshold, the product corresponding to the at least one product image is classified as non-relevant. A product that is associated with only non-relevant product images is discarded. In particular, preferably, no further steps of this method are applied to non-relevant product images after applying the relevance detecting algorithm. It has been found that this step 705 may significantly increase the recall of a duplicate detecting algorithm applied later in step 706. In this further step 706, the duplicate detecting algorithm is applied on at least one of the sales images or the extracted product images for each of the plurality of products. The duplicate detecting algorithm identifies whether the product corresponding to the sales image or the extracted product image is a duplicate of at least one reference product depicted on at least one reference image, the reference product having been previously classified as infringing by a user. Preferably, the reference image may be stored in a product database 730, the product database comprising reference images relating to reference products which have been previously classified as infringing or optionally non-infringing by a user and have received a corresponding ground truth infringement label. Preferably, the duplicate detecting algorithm may compare the sales image or product image with one or several reference images from the product database 730 and determine a measure of similarity for each pair of compared images. When the measure of similarity is above a pre-determined duplicate threshold, the product corresponding to the compared sales image or product image is identified as a duplicate of the product depicted on the reference image. Optionally the reference images may be clustered. The clustering may be achieved by applying a clustering algorithm that searches for similarities among the reference images and that groups reference images that are similar together. For the clustering, within each group, a main reference image may be determined, in particular the reference image that is most similar to all other reference images in this group. Preferably, the duplicate detecting algorithm is only applied to the main reference images of each group. The duplicate detecting algorithm may comprise a Siamese network. Alternatively, the duplicate algorithm may be based on template matching. Optionally, if a duplicate is identified, the duplicate detecting algorithm assigns the ground truth infringement label of the reference product to the duplicate product. Images that are duplicates and infringing are added to a set of product infringement information data in step 710. In this step 710, a set of product infringement information data is provided that comprises at least the sales address for each product, which has been identified as a duplicate of a product having been previously classified as infringing by a user. Images that are duplicates and non-infringing may optionally be stored in a corresponding non-infringing list, in step 213, or may be discarded. A filter algorithm 722 may be applied to decide what to do with each image depending on the output of the duplicate detecting algorithm. Optionally, a further step 708 may be provided. This step 708 comprises providing a user interface allowing user input, the user interface presenting sales images and/or extracted product images of products that have not been identified as a duplicate to a user for classification, and allowing the user to label each product with a ground truth infringement label comprising information on whether the product has been classified as infringing or not-infringing by a user. This step may be followed by another step 714 of storing the sales images and/or extracted product images of products that have been classified by the user, together with the assigned ground truth infringement labels and optionally the sales addresses, as reference products in the product database. Images that have been classified as infringing by the user may be added to the provided set of product infringement information data in step 710. A further filter algorithm 721 may be applied to determine whether a product has been classified as infringing by a user to ensure that only the products that are classified as infringing are added to the set of product infringement information data. Optionally, the user interface may provide the user with the option of classifying a product as non-determinable. In this case, the set of product infringement information data further comprises at least a non-determinable label and the sales address for each product which has been classified as non-determinable. In particular, when the user finds that it is not possible to determine from the sales image or product image whether the product is infringing or non-infringing, the user may select this label. According to an optional step 712, the set of product infringement information is added to a takedown list, for each product, which has been found to be a duplicate of an infringing product or which as been assigned an infringement label indicating an infringement. Additionally or alternatively products that are part of the set of product infringement information is added to a gather-information list, when it comprises the non-determinable label. Additionally or alternatively, according to an optional step images that are non-infringing may be stored on a non-infringing list. Products from the gather-information list may be purchased to allow a user to better assess whether they are infringing a protected design. The method may be repeated at a later time in order to find more infringing products, in particular infringing products that have been added to shops in the meantime. In particular the method may than be applied with the updated database 230.

The above-discussion is intended to be merely illustrative of the present system and should not be construed as limiting the appended claims to any particular embodiment or group of embodiments. Accordingly, the specification and drawings are to be regarded in an illustrative manner and are not intended to limit the scope of the appended claims. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "an" or "a" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### List of reference signs:

- 10: sales image
- 11: extracted product image
- 101-113: method steps
- 120: filter algorithm
- 121: filter algorithm
- 201-214: method steps
- 220: filter algorithm
- 221: filter algorithm
- 222: filter algorithm
- 230: database
- 310-350: method steps
- 401-402: method steps
- 501-502: method steps
- 601-604: method steps
- 710-715: method steps
- 721: filter algorithm
- 722: filter algorithm
- 730: database

## Claims

1. A computer-implemented method for detecting infringements of at least one design protected by an intellectual property right, comprising the following steps:
(a) receiving product information of each of a plurality of products, the product information comprising a sales address, in particular a product page internet address, and a sales image (10) comprising a depiction of the product;
(b) for each of the plurality of products, applying a product extracting algorithm on the sales image (10), wherein the output of the product extracting algorithm is at least one extracted product image (11) that is a part of the sales image (10), the at least one extracted product image (11) comprising the depiction of the product;
(c) applying a trained infringement predicting algorithm on each of the extracted product images (11) to generate a subset of products predicted to be infringing, wherein the output of the infringement predicting algorithm comprises an infringement classification, wherein the infringement classification comprises an infringement confidence value and an infringement prediction of whether the product infringes the at least one design, wherein the product is predicted to be infringing if the infringement confidence value exceeds a predetermined infringement threshold;
(d) presenting sales images (10) and/or extracted product images (11) only from the subset of products that are predicted to be infringing to a user via a user interface and allowing the user to confirm the infringement prediction via the user interface, thereby labelling each product with a ground truth infringement label comprising information on whether the product has been classified as infringing or not-infringing by a user;
(e) providing a set of product infringement information data comprising at least the ground truth infringement label and the sales address for each product confirmed to be infringing by the user.

2. The method according to claim 1,
wherein the infringement predicting algorithm comprises a neural network that is trained to determine an infringement classification for product images (11) based on training data comprising product images associated with at least one ground truth infringement label, the at least one ground truth infringement label comprising information on whether the corresponding product has been classified as infringing or not-infringing by a user.

3. The method according to any one of the preceding claims,
wherein the user interface provides the user with the option of giving a product a non-determinable label,
wherein the set of product infringement information data further comprises at least the non-determinable label and the sales address for each product having the non-determinable label.

4. The method according to any one of the preceding claims,
wherein the at least one design comprises a plurality of designs, wherein the user is allowed to set or confirm an infringement label for each of the plurality of designs, wherein the set of product infringement information data comprises a corresponding ground truth infringement label for at least one of the plurality of designs.

5. The method according to any one of the preceding claims, comprising an additional step of
applying a duplicate detecting algorithm on each of the extracted product images (11),
wherein the duplicate detecting algorithm identifies whether the product corresponding to the extracted product image (11) is a duplicate of a reference product depicted on a reference image stored in a product database (230), wherein the product database (230) comprises reference images relating to reference products which have been previously classified as infringing or non-infringing by a user and having received a corresponding ground truth infringement label,
and, if a duplicate is identified, assigns the ground truth infringement label of the reference product to the duplicate product,
wherein duplicate products with a positive infringement label are added to the set of product infringement data without presenting them to the user,
wherein, optionally, the set of product infringement information data comprises, for each infringing duplicate product, a duplicate label.

6. The method according to claim 5,
wherein the reference images have been clustered by applying a clustering algorithm that searches for similarities among the reference images and that groups reference images that are similar together,
wherein, within each group, a main reference image is determined, in particular the reference image that is most similar to all other reference images in this group,
wherein the duplicate detecting algorithm is only applied to the main reference images of each group.

7. The method according to any one of claims 5 to 6,
wherein extracted product images (11) that have been presented to the user for confirmation are added to the product database (230) together with the corresponding ground truth infringement label comprising information on whether the corresponding product has been classified as infringing or not by a user.

8. The method according to any one of the preceding claims,
wherein the infringement predicting algorithm is automatically retrained, by using extracted product images (11) that have been presented to the user for confirmation and the corresponding ground truth infringement label as retraining data.

9. The method according to any one of the preceding claims,
wherein an optical character recognition algorithm is applied to the sales image (10) or the extracted product image (11) in order to filter out any product of a manufacturer that has the right to use the design, such that no further method steps of this method are applied to the product after the optical character recognition algorithm has filtered out the product, in particular such that the infringement predicting algorithm, and optionally the duplicate detecting algorithm, is/are not applied to the filtered-out product.

10. The method according to any one of the preceding claims,
wherein the step of receiving product information comprises applying a crawler algorithm,
wherein the crawler algorithm searches a predefined part of the world wide web, in particular one or several predefined internet shops, with a search term related to the product, and extracts the product information from each search hit or from a predefined number of first-listed search hits.

11. The method according to any one of the preceding claims comprising an additional step of
applying a relevance detecting algorithm on the at least one product image (11), wherein the relevance detecting algorithm determines a similarity of the product image (11) with each of the at least one designs,
wherein, when the similarity with all designs is below a relevance threshold, the product corresponding to the at least one product image (11) is classified as non-relevant,
wherein a product being associated with only non-relevant product images is discarded, in particular such that no further steps of this method are applied to the non-relevant product image after applying the relevance detecting algorithm.

12. The method according to any one of the preceding claims,
wherein a reverse image internet search is initiated for a product that is associated with a ground truth infringement label that indicates an infringement,
wherein for images found via the reverse image internet search that are part of a product offer in a web shop, a set of product infringement information data is created that has the same infringement classification as the product on which reverse image internet search is based.

13. A computer program comprising instructions which, when the program is executed by a computer, cause the computer to carry out the method of any one of the preceding claims.

14. An infringement detecting system comprising
a computer with internet access having installed thereon a computer program according to claim 13 and, optionally, a data storage comprising a product database (230) according to claim 5.

15. A method for training a neural network, in particular a convolutional neural network, comprising the following steps:
(a) providing a training database comprising training data that contain product images that are each associated with a ground truth infringement label,
(b) training the neural network with the training database to determine an infringement classification comprising an infringement confidence value for product images.
